# EUROPEAN PATENT APPLICATION

(11) **EP 4 807 969 A1**
(43) Date of publication of application: **16.09.2026**
(21) Application number: 25163340.0
(22) Date of filing: 12.03.2025
(51) Int. Cl.: H02M 7/219

(54) **METHOD FOR OPERATING A CONVERTER OF AN INDUSTRIAL AUTOMATION SYSTEM**

(71) Applicant: Murrelektronik GmbH, 71570 Oppenweiler (DE)
(72) Inventor: PREIN, Olaf, 32676 Lügde-Rischenau (DE); HILTUNEN, Jani, 05400 Jokela (FI)
(74) Representative: Bösherz Goebel Patentanwälte

(57) **Abstract**

The invention relates to a method (100) for operating a converter (2) of an industrial automation system (1) based on an analysis of a power quality in the industrial automation system (1), the converter (2) being provided for converting an alternating current of an external power supply (3) into a direct current for a power supply (4) of the industrial automation system (1), the converter (2) being preferably configured as an inverter (2), more preferably as a bidirectional inverter (2) and/or voltage source inverter (2),
comprising:
- Analysing (101) the power quality in the industrial automation system (1),
- Modifying (102) a mode of operation of the converter (2) depending on a result of the analysis (101), thereby adapting the conversion by the converter (2) to the power quality.

Furthermore, the invention relates to an industrial automation system, a computer program, a data processing apparatus, and a power supply unit for this purpose.

## Description

The present invention relates to a method for operating a converter of an industrial automation system. Furthermore, the invention relates to an industrial automation system, a computer program, a data processing apparatus, and a power supply unit for this purpose.

### State of the art

Voltage Source Converters (VSCs) play a crucial role in modern systems like industrial automation systems, particularly with the increasing integration of renewable energy sources such as wind turbines, solar photovoltaics, and battery energy storage systems. These converters enable efficient power conversion between AC and DC domains, supporting bidirectional power flow, grid stability, and enhanced energy management.

Over the years, advancements in VSC technology have focused on improving efficiency, reducing losses, and achieving high power quality. The conventional control structures used in VSCs, such as the dq-frame-based control, have proven effective under balanced grid conditions. These methods utilize decoupled control loops to regulate active and reactive power with high precision, ensuring stable operation.

However, as the complexity of power grids increases - driven by the proliferation of distributed energy resources (DERs), electrification of transportation, and variable load conditions - these converters are increasingly exposed to low power quality scenarios. Such scenarios include voltage sags, harmonics, and voltage unbalance, which are common in distribution-level grids.

Voltage unbalance may occur due to uneven load distribution, faults in the grid, or single-phase operations in three-phase systems. This phenomenon introduces negative sequence components in the grid voltage, resulting in asymmetry that the conventional dq-control-based VSCs are not well-equipped to handle. As a result, the converters may experience harmonic distortion in the AC current, oscillations in the DC voltage or reduced efficiency and increased heat generation. Harmonics are caused by nonlinear loads or disturbances in the grid and lead to distorted current waveforms and may degrade the performance of VSCs by increasing Total Harmonic Distortion (THD), causing power losses, overheating, and mechanical stress on electrical components.

The disadvantage of the known solutions is that there is no dynamic counter measure for dealing with a low power quality, especially in industrial automation systems. It is therefore an object of the present invention to at least partially overcome the disadvantages described above. In particular, it is an object of the present invention, to provide a way of dynamically dealing with a low power quality.

### Disclosure of the invention

According to aspects of the invention a method with the features of claim 1, an industrial automation system with the features of claim 12, a computer program with the features of claim 13, a data processing apparatus with the features of claim 14 as well as a power supply unit with the features of claim 15 are provided. Further features and details of the invention are disclosed in the respective dependent claims, the description and the drawings. Features and details described in the context to the inventive method also correspond to the inventive industrial automation system, the inventive computer program, the inventive data processing apparatus as well as the inventive power supply unit, and vice versa in each case.

According to an aspect of the invention a method for for operating a converter of an industrial automation system based on an analysis of a power quality in the industrial automation system is provided, the converter being provided for converting an alternating current of an external power supply into a direct current for a power supply of the industrial automation system, the converter being preferably configured as an inverter, more preferably as a bidirectional inverter and/or voltage source inverter, the method comprising:
- Analysing the power quality in the industrial automation system, which may for example comprise determining at least one characteristic of the power quality and/or comparing (the) at least one characteristic of the power quality to a defined threshold,
- Modifying a mode of operation of the converter depending on a result of the analysis, thereby adapting the conversion by the converter to the power quality.

The external power supply may only provide alternate current and may thus be understood as an alternating power supply. The converter, designed as a bidirectional, may be designed for bidirectional power conversion, allowing energy to flow between the AC and DC sides. The industrial automation system according to the invention may thus be used in applications such as renewable energy systems, battery energy storage, or motor drives. By means of the method according to the invention, it is possible to dynamically adjust the operating mode of the voltage converter in response to power quality fluctuations within the industrial automation system. This adjustment may optimize energy efficiency and system performance and may also ensure a safe operation of the industrial automation system, because a low power quality may lead to unpredictable errors and damages within the industrial automation system. The method may thus allow for a proactive mitigation of power quality issues, potentially preventing disruptions to critical operations.

The external power supply may also be referred to as power grid. The power grid may comprise at least three phases and therefore be configured as an at least three-phase power grid. The analysis may be based on the result of a monitoring of all phases. The grid may typically provide 400V AC at 50Hz or 480V AC at 60Hz depending on geographical location.

In a preferred embodiment, the converter may include a DC/DC boost stage configured to elevate the voltage level to a required DC-link voltage, wherein particularly said DC-link voltage is maintained substantially constant through active control. The DC/DC boost stage of the converter system may operate in conjunction with the power grid. This boost stage may be essential for elevating the rectified grid voltage to the required DC-link voltage level.

It is possible that, during the modifying, the mode of operation is switched between a first mode of operation where the conversion, particularly voltage conversion, is performed by means of at least one switching element, particularly transistor element of the converter and particularly also at least one body diode of the at least one switching/transistor element and a second mode of operation where the conversion is performed by means of only (the) at least one body diode of the at least one switching/transistor element. The at least one switching/transistor element may be a transistor, particularly a metal-oxide-semiconductor field-effect transistor. The at least one body diode may be integrated in a respective corresponding switching/transistor element, particularly transistor, preferably metal-oxide-semiconductor field-effect transistor. Using MOSFETs as transistors in the inverter may offer advantages such as lower switching losses and higher efficiency compared to traditional silicon-based transistors. The integration of body diodes within the respective corresponding switching/transistor element may simplify a circuit design by eliminating a need for separate diode components. This integration may also reduce an overall size and cost of the converter.

For performing the switch between the first mode of operation and the second mode of operation, the at least one switching/transistor element of the converter may be turned off, i.e. not longer be actively used. By means of the first mode of operation, a more precise conversion, preferably voltage conversion, particularly rectification, may be provided. But it may be possible, that due to a low power quality, the first mode of operation is not possible or highly impaired. Thus, the second mode of operation may advantageously provide the conversion, particularly rectification, in such cases, where the first mode of operation is no longer possible or sensible. If the power is of sufficient quality for enabling the first mode of operation again, a switch to the first mode of operation may be performed. The second mode of operation may thus be used as a backup mode, providing a reliable and continuous conversion, particularly rectification, even when the first mode of operation is not possible or highly impaired. Therefore, the method according to the invention may provide a more versatile and robust conversion, particularly rectification, for a wide range of power qualities and conditions.

It is possible that the method further comprises:
- Acquiring, particularly measuring, a voltage and/or a current of the external power supply, the external power supply being connected to the industrial automation system for supplying the same, wherein the acquiring, particularly measuring, may be performed repeatedly for a respective defined timeframe,
- Performing the analysing based on the acquired voltage and/or current, wherein the analysing is particularly performed repeatedly for each respective defined timeframe where the voltage and/or the current of the external power supply is acquired, particularly measured.

In other words, the voltage and/or the current of the external power supply may be acquired, particularly measured, repeatedly for the respective defined timeframe. After each acquisition, particularly measurement, the voltage and/or the current acquired, particularly measured, during each acquisition, particularly measurement, may be analysed. The acquired data regarding the voltage and/or the current may thus serve as an input for the power quality analysis, allowing for a comprehensive and accurate assessment of the power quality. To acquire, particularly measure, the voltage and/or current of the external power supply, a multimeter or a specialized power supply tester may be used. The multimeter may therefore be connected to power supply output terminals to measure the voltage and current.

It is also possible that the acquiring, the analysing and the modifying are performed by a power supply unit of the industrial automation system, wherein the conversion is performed by the same power supply unit. At least one of these steps, preferably all of these steps, may be performed automatically. The power supply unit may be a self-contained system providing all of the aforementioned steps. This consolidated approach may simplify the design and potentially reduce costs associated with separate components for these functions. Furthermore, this integrated solution may allow for real-time adjustments to the conversion process, optimizing power usage and enhancing efficiency.

It is further possible that the external power supply is a mains power supply and the acquiring is performed respectively in each phase conductor of the mains power supply. It is possible that the external power supply, particularly the mains power supply, is a three-phase power supply. The analysis of power quality may be conducted on each phase conductor separately, enabling a comprehensive understanding of the voltage and current characteristics in each phase conductor. This detailed analysis may allow for more precise control over the conversion process.

It is possible that the acquiring comprises measuring a respective voltage magnitude and/or current magnitude of (the) individual phase conductors of the external power supply and/or performing a phase measurement to determine a phase difference between the individual conductors of the external power supply.

The phase measurement may be performed using an oscilloscope with voltage and current probes. The voltage probe may therefore first be connected to an output of the external power supply. The current probe may then be used to measure the current in a load connected to the external power supply. The waveform of the voltage and the current may b observed and/or analysed on the oscilloscope. Next, a time difference (*Δt*) between the voltage and current waveforms' zero crossings or peaks may be measured. Then, the phase difference (ϕ\phiϕ) may be calculated using: $ϕ = \frac{Δ t}{T} \times 360 °$ where *T* is the waveform's period.

Alternatively, a power analyzer may be used to perform the phase measurement and calculate phase angles of the voltage and/or current.

This detailed information about the voltage and phase relationships within the external power supply may allow for a more comprehensive understanding of the power quality. The insights gained from these measurements may then inform the decision-making process regarding the modification of the conversion mode, particularly voltage conversion mode.

It is further possible that the method further comprises:
- Determining a Voltage Unbalance Factor of the external power supply based on the measured voltage magnitude and the performed phase measurement,
wherein, during the analysing, the power quality is evaluated based on an analysis of the determined Voltage Unbalance Factor. The analysis may identify deviations from ideal voltage conditions, such as imbalances between phases, which may impact the performance and reliability of equipment in the industrial automation system. Considering the Voltage Unbalance Factor may provide for a precise evaluation of the power quality.

The Voltage Unbalance Factor (VUF) particularly quantifies a degree of unbalance in a three-phase system. It may be expressed as a percentage and can be determined using the following steps. First, the three-phase voltages may be measured, for example *Vₐ, V_{b},* and *V_{c}.* These may be line-to-neutral or line-to-line voltages.

Next, the Symmetrical Components may be calculated. Using the Theory of Symmetrical Components, the three-phase voltages may be decomposed into the following three components: a positive sequence (*Vₚ*): representing balanced voltages rotating in a correct sequence, a negative sequence (*V_{N}*) representing unbalanced voltages rotating in an opposite sequence and a zero sequence (*V₀*) representing unbalanced voltages with no rotation (common mode). The general decomposition may be *V_{abc} = V_{P} + V_{N} + V*₀.

The Voltage Unbalance Factor may be calculated as: $VUF = \frac{{V}_{N}}{{V}_{P}}$ where *V_{N}* particularly is a magnitude of the negative sequence voltage and *V_{P}* particularly is a magnitude of the positive sequence voltage. If the VUF should be expressed as a percentage, an additional multiplication with 100 may be performed.

The sequence components may be extracted mathematically or experimentally from the measured three-phase voltages using a transformation matrix such as the following: $\left[\begin{matrix}{V}_{P} \\ {V}_{N} \\ {V}_{0}\end{matrix}\right] = \frac{1}{3} \left[\begin{matrix}1 & 1 & 1 \\ 1 & {a}^{2} & a \\ 1 & a & {a}^{2}\end{matrix}\right] \left[\begin{matrix}{V}_{a} \\ {V}_{b} \\ {V}_{c}\end{matrix}\right]$ where *a* = *e*^{*j*120°} is particularly a complex operator.

A low VUF ( for example close to 0%) may indicate a well-balanced three-phase system. A high VUF may indicate a significant unbalance, which may cause inefficiencies, overheating, and damage to equipment like motors and transformers.

It is possible that the method further comprises:
- Determining a Total Harmonic Distortion (THD) based on an analysis of the acquired voltage and/or current,
wherein, during the analysing, the power quality is evaluated based on an analysis of the determined Total Harmonic Distortion. This detailed analysis considering the Total Harmonic Distortion may allow for a more nuanced understanding of the power quality, enabling targeted adjustments to the operating mode of the converter.

The Total Harmonic Distortion (THD) particularly measures an extent of distortion in a signal compared to its fundamental frequency.

Mathematically, the Total Harmonic Distortion may be calculated as follows: $THD = \sqrt{\frac{{\sum }_{n = 2}^{∞} {I}_{n}^{2}}{{I}_{1}^{2}}} \times 100$ where *I*₁ may be the magnitude of the fundamental component and *Iₙ* the magnitudes of the harmonic components. Thus, the THD may be calculated as a percentage.

The harmonic components of the current may be affected by unbalanced voltages, which may introduce negative sequence components and/or third harmonic components.

The THD may be quantified by observing current waveforms in real-time and calculating harmonic contributions relative to the fundamental component.

It is possible that the method further comprises:
- Initiating a visualisation of the power quality, particularly on a display of the industrial automation system or a display of an external device, particularly an external data processing apparatus like a computer or a smartphone, the visualisation particularly comprising a curve shape of the power across a defined timespan and/or an evaluation of the power quality and/or at least one characteristic of the power quality like, for example, a current percentage value of the Voltage Unbalance Factor or the Total Harmonic Distortion.

A user may be informed by means of the visualization about the power quality, for example in order to preemptively derive a necessary action, e.g. shutting down the industrial automation system, determining a source for the poor quality and/or taking care of a repair or replacement of a component accordingly. The visualization may allow for a real-time monitoring of power quality parameters, enabling the user to identify potential issues promptly. The curve shape visualization may reveal fluctuations or anomalies in the power supply, facilitating the detection of disturbances or voltage sags.

It is possible that the method further comprises:
- Comparing the power quality with at least one defined threshold, the at least one defined threshold for example relating to the determined Voltage Unbalance Factor and/or to the determined Total Harmonic Distortion,
- Initiating an alert, if the power quality is below the defined threshold, the alert being a visual alert by means of a display of the industrial automation system or of an external device and/or an acoustic alert by means of speakers of the industrial automation system or of an external device, the alert particularly comprising a warning indicating a low power quality and/or an instruction for a repair of the industrial automation system.

A user may be warned by means of the alert. The user may then derive a necessary action, e.g. shutting down the industrial automation system, determining a source for the poor quality and/or taking care of a repair or replacement of a component accordingly. It may be provided, that the alert comprises a cause for the low power quality that is derived from analysing the power quality. This may help the user to derive the necessary action. The alert may thus provide specific information about the low power quality and offer instructions for rectifying the issue within the industrial automation system. This added layer of monitoring and notification may allow for a timely intervention to address potential problems related to the power quality, ensuring the reliable operation of the system.

It is also possible that during the modifying, the mode of operation is switched between a first mode of operation and a second mode of operation. The first mode of operation may be configured as an inverter operation mode. The second mode of operation may be configured as an rectifier operation mode, particularly emergency mode.

The two modes may be different in that the at least one switching/transistor element, preferably in the form of inverter MOSFETs, are actively used in the first mode of operation and passively used in the second mode of operation. This means that preferably the body diodes that rectify the alternating current are used in the first mode of operation, thereby causing a reduction of the direct current for a power supply.

According to another aspect of the invention, the method may be provided for operating the converter and/or for analyzing the power quality. The method may be used to maintain operation in case of unbalanced grid conditions, especially when harmonic distortion exceeds certain limits. The method may include a monitoring and/or adjustment of control parameters to optimize the operation of the converter during voltage variations in any of the three phases of the power supply.

The converter may be provided for converting an alternating current of an external power supply into a direct current for a power supply. The converter may comprise multiple switching elements, particularly switching/transistor elements, preferably arranged in a three-phase bridge configuration, each phase may be equipped with current and voltage sensing capabilities. The converter may also includes control circuitry configured to regulate both AC and DC side parameters through coordinated operation of said switching elements.

The converter is preferably configured as an inverter, more preferably as a bidirectional inverter and/or voltage source inverter (VSC). The VSC may comprise at least three half-bridge modules connected in parallel to a DC-link capacitor. Each half-bridge module may also comprise two controllable switching/transistor elements with anti-parallel diodes, also referred to as body diodes. The VSC may be configured to operate with a switching frequency of at least ten times the grid frequency to enable effective current and voltage control through pulse width modulation. Further, the VSC may include protection circuits to prevent overcurrent and overvoltage conditions during both normal operation and fault scenarios.

According to a further aspect of the invention, the converter may comprise a recuperation functionality for feeding back energy into the power grid during braking or load reduction phases, thus enabling bidirectional power flow capability.

The DC-link may comprise at least one capacitor forming an intermediate circuit between the AC and DC sides. The capacitor may be dimensioned to maintain voltage stability during power flow variations and network disturbances.

According to yet another aspect, the converter may implement a voltage loop control (VLC) for regulating the DC-link voltage, wherein said control may operate with a bandwidth substantially lower than the current control bandwidth to ensure stable operation.

The method may further comprises monitoring the Total Harmonic Distortion (THD) of the AC currents, wherein said THD may be calculated through an analysis and particularly real-time Fourier analysis of the current waveforms in all three phases.

In a preferred implementation, the THD measurement may comprise:
- sampling the phase currents at a rate of at least twice the highest harmonic frequency of interest,
- performing a Fast Fourier Transform (FFT) on the sampled data,
- calculating the ratio between the RMS sum of all harmonic components and the fundamental component.

The method may additionally provide for adaptive control parameter adjustment based on the measured THD values to maintain power quality within predetermined limits during grid voltage unbalance conditions.Another aspect of the invention is an industrial automation system, the industrial automation system being designed to carry out the method according to the invention. Thus the industrial automation system according to the invention brings the same advantages as have been described in detail with reference to the method according to the invention. It is possible that the industrial automation system comprises programmable controllers, sensors, actuators, and/or communication networks. The industrial automation system may be employed in the field of automation technology. The method described in the preceding claims may be implemented within this industrial automation system, enabling automated control and monitoring of industrial processes. The industrial automation system according to the invention may enhance efficiency, productivity, and safety in various manufacturing or production settings.

In another aspect of the invention a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

The computer may be a data processing device or any other computer system which executes the computer program. The computer may include at least one processor that can be used to execute the computer program. Also, a non-volatile data memory may be provided in which the computer program may be stored and from which the computer program may be read by the processor for being carried out.

Another object of the invention is a data processing apparatus comprising means for carrying out the steps of the method according to the invention. The data processing apparatus according to the invention thus has the same advantages as those described in detail with reference to a method according to the invention.

The data processing apparatus according to the invention and preferably the computer can be designed to execute the computer program according to the invention. For this purpose, the data processing apparatus according to the invention can have at least one processor. A non-volatile data memory can also be provided, in which the computer program is stored and from which the computer program can be read out by the processor for execution.

It is also conceivable that the data processing apparatus according to the invention comprises at least one integrated circuit such as a microprocessor or an application-specific integrated circuit (ASIC) or an application-specific standard product (ASSP) or a digital signal processor (DSP) or a field programmable gate array (FPGA) or the like. The data processing apparatus or computer according to the invention can thus also be designed as an electronic circuit. The data processing apparatus according to the invention may further comprise at least one interface for data exchange, e.g. an Ethernet interface or an interface for LAN (Local Area Network) or WLAN (Wireless Local Area Network) or System-on-a-Chip (SoC) or another radio interface such as for Bluetooth or Near Field Communication (NFC). Furthermore, the data processing apparatus according to the invention can be designed as one or more control units, i.e. also as a system of control units.

The data processing apparatus according to the invention can also be provided in whole or in part in a cloud and/or as a server in order to make the data processing available for a local application via the interface. Accordingly, the data processing apparatus according to the invention can also be designed as a computer system such as a distributed system and preferably a server-client system. It is also possible for the data processing apparatus according to the invention to be designed as a mobile device, such as a smartphone.

Another aspect of the invention is a power supply unit comprising a data processing apparatus according to the invention. Thus the power supply unit according to the invention power brings the same advantages as have been described in detail with reference to the method and the data processing apparatus according to the invention.

According to another aspect of the invention a computer-readable storage medium may be provided which comprises the computer program according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, all, each and/or at least one of the disclosed method steps may be computer-implemented and/or automated.

Further advantages, features and details of the invention will be apparent from the following description, in which embodiments of the invention are described in detail with reference to the drawings. In this connection, the features mentioned in the claims and in the description may each be essential to the invention individually or in any combination. Showing:
- Fig. 1: A method, computer program, a storage medium and apparatus according to embodiments of the invention,
- Fig. 2: A schematic drawing of an industrial automation system according to embodiments of the invention,
- Fig. 3: A circuit diagram of a converter according to embodiments of the invention,
- Fig. 4: A performance analysis graph according to embodiments of the invention.

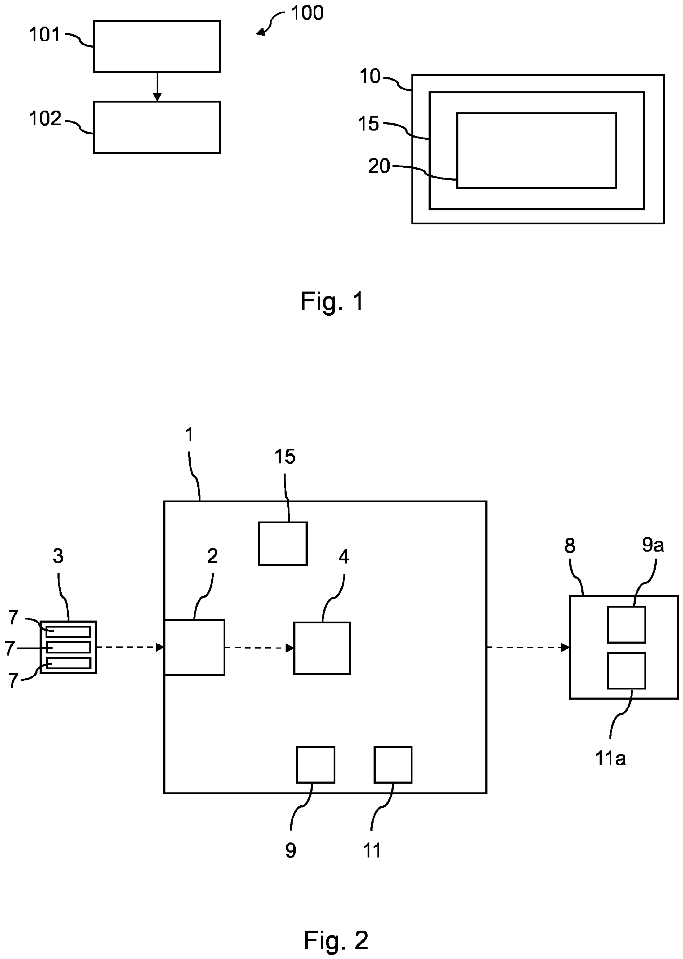

Fig. 1 shows a method 100, a computer program 20, a power supply unit 15 and a data processing apparatus 10 according to embodiments of the invention.

Fig. 1 particularly shows an embodiment of a method 100 for method for for operating a converter 2 of an industrial automation system 1 based on an analysis of a power quality in the industrial automation system 1. The converter 2 is provided for converting an alternating current of an external power supply 3 into a direct current for a power supply 4 of the industrial automation system 1, the converter 2 being preferably configured as an inverter 2, more preferably as a bidirectional inverter 2 and/or voltage source inverter 2. In a first step 101, the power quality in the industrial automation system 1 is analysed. In a second step 102, a mode of operation of the converter 2 is modified depending on a result of the analysis 101, thereby adapting the conversion by the converter 2 to the power quality.

During the modifying 102, the mode of operation may be switched between a first mode of operation where the conversion is performed by means of at least one switching/transistor element 5 of the converter 2, and particularly also at least one body diode 6, and a second mode of operation where the conversion is performed by means of only (the) at least one body diode 6 of the at least one switching/transistor element 5.

The method according to the invention may comprise an acquisition or a measuring of a voltage and/or a current of the external power supply 3. The external power supply 3 is particularly connected to the industrial automation system 1 for supplying the same. The analysing 101 may then be performed based on the acquired voltage and/or current.

The acquiring, the analysing 101 and the modifying 102 may be performed by a power supply unit 15 of the industrial automation system 1 and the conversion may be performed by the same power supply unit 15.

The external power supply 3 may be a mains power supply and the acquiring may be performed respectively in each phase conductor 7 of the mains power supply. The mains power supply may be a three-phase power supply.

The acquiring may comprise measuring a respective voltage magnitude and/or current magnitude of (the) individual phase conductors 7 of the external power supply. Alternatively or additionally, a phase measurement may be performed to determine a phase difference between the individual conductors or between at least two individual conductors of the external power supply.

The method according to the invention may comprise determining a Voltage Unbalance Factor (VUF) of the external power supply based on the measured voltage magnitude and the performed phase measurement. During the analysing 101, the power quality may then be evaluated based on an analysis of the determined Voltage Unbalance Factor.

The method according to the invention may also comprise determining a Total Harmonic Distortion based on an analysis of the acquired voltage and/or current. During the analysing 101, the power quality may then be evaluated based on an analysis of the determined Total Harmonic Distortion.

The method according to the invention may comprise initiating a visualisation of the power quality. The power quality may be visualised on a display 9 of the industrial automation system 1 or on a display 9 of an external device 8. In the latter case, a transmission of relevant data regarding the power quality may first be transmitted to the external device 8. The external device 8 may be an external data processing apparatus like a computer or a smartphone. The visualisation may comprise a curve shape of the power across a defined timespan and/or an evaluation of the power quality and/or at least one characteristic of the power quality like a current percentage value of the VUF or the THD.

The method according to the invention may further comprise comparing the power quality with a defined threshold. If the power quality is below the defined threshold, an alert may be initiated. The alert may be a visual alert by means of a display 9 of the industrial automation system 1 or a display 9a of an external device 8 and/or an acoustic alert by means of speakers 11 of the industrial automation system 1 or speakers 11a of an external device 8. The alert may comprise a warning indicating a low power quality and/or an instruction for a repair of the industrial automation system 1.

The at least one switching/transistor element 5 may be a metal-oxide-semiconductor field-effect transistor. The at least one body diode 6 may be integrated in a respective corresponding switching/transistor element 5, particularly metal-oxide-semiconductor field-effect transistor.

Fig. 2 shows an industrial automation system 1 according to embodiments of the invention. An external power supply 3 is connected to the industrial automation system 1 for supplying the same with alternating current. The external power supply 3 according to this embodiment comprises three phase conductors 7.

The industrial automation system 1 according to the embodiment shown in Fig. 2 comprises a converter 2 for converting the alternating current of the external power supply 3 to a direct current for an, particularly internal, power supply 4 of the industrial automation system 1. The industrial automation system 1 further comprises a power supply unit 15, a display 9 and speakers 11. According to the embodiment shown in Fig. 2, the industrial automation system 1 is connected to an external device 8, which comprises a display 9a and speakers 11a. The connection may be a wired or preferably a wireless connection. Via the connection, relevant data regarding the power quality may be transmitted from the industrial automation system 1 to the external device 8.

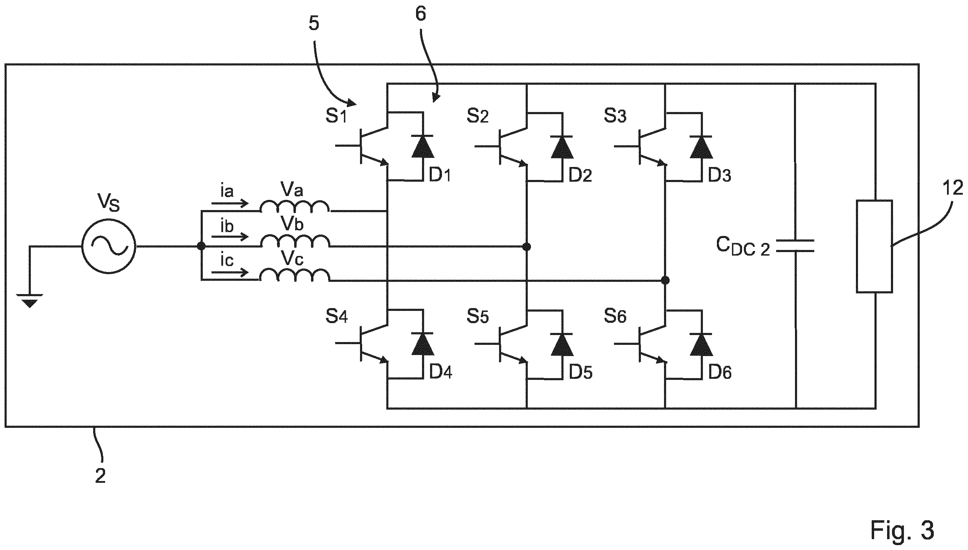

Fig. 3 shows a schematic circuit diagram of a converter 2 according to embodiments of the invention. The converter 2 is particularly a three-phase Voltage Source Converter (VSC) for converting Alternating Current (AC) input into a Direct Current (DC) output. The converter 2 is connected to an external power supply 3, particularly a three-phase AC source, which is labeled *Vₛ* through three input lines, i.e. three phase conductors 7. The external power supply 3 may provide three-phase voltages *Vₐ, V_{b},* and *V_{c},* and respective phase currents *iₐ*, *i_{b},* and *i_{c}* may also be measured.

The converter 2 according to this embodiment features six switching/transistor elements 5, labeled *S*₁, *S*₂, ... , *S₆,* for example Insulated Gate Bipolar Transistors (IGBTs) or Metal-Oxide-Semiconductor Field-Effect Transistors (MOSFETs). Each switching/transistor element 5 according to this embodiment comprises an anti-parallel body diode 6, labeled *D*₁, *D₂*, ..., *D*₆, to allow current flow during the off-state of the switching/transistor elements 5. This may advantageously support bidirectional current handling.

The converter 2 according to this embodiment is connected to a DC link capacitor labeled *C_{DC},* which may smooth the rectified DC voltage. The DC side may further be connected to a load 12, which may be a component of the industrial automation system 1 like a motor, ensuring steady power delivery.

The converter 2 according to this embodiment may be designed for bidirectional power conversion, allowing energy to flow between the AC and DC sides, which may be relevant for applications such as renewable energy systems, battery energy storage, or motor drives. The converter 2 is thus preferably be a bidirectional inverter.

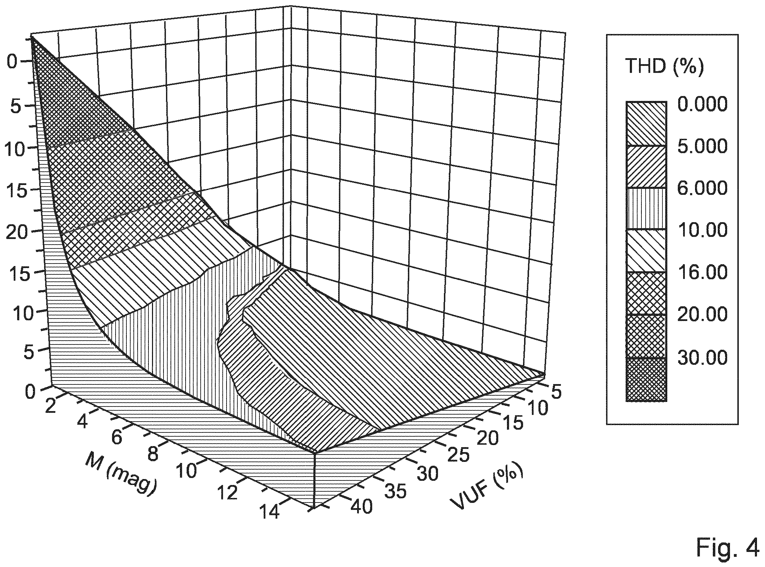

Fig. 4 shows a performance analysis graph showing a relation between the Voltage Unbalance Factor (VUF), a control parameter M (representing a ratio of voltage and current control bandwidths), and a resulting Total Harmonic Distortion (THD) in percentage. The horizontal axes particularly represent VUF (%): Voltage Unbalance Factor, indicating the degree of imbalance in the grid voltage (e.g., caused by faults or uneven load distribution) as well as M (mag): A parameter proportional to the ratio of voltage and current control bandwidths. The vertical axis particularly represents THD (%): Total Harmonic Distortion, quantifying the distortion in the AC current caused by harmonic components relative to the fundamental. The performance analysis graph particularly uses a scale to indicate THD levels: a first area may represent safe operating conditions, where the THD is within acceptable limits, for example as per IEEE standards. Here, the power may thus be of sufficient quality to utilize the first mode of operation according to the invention. In a second area, increasing harmonic distortion may be present, where a transitioning to unsafe operational zones may be happening. The performance of the converter 2 may thus be degraded and the second mode of operation according to the invention may be utilized. The performance analysis graph particularly illustrates that higher VUF levels may lead to a rapid increase in THD, leading into unsafe zones with a degraded power quality. The THD may provide an advantageous measure for determining the power quality in the industrial automation system 1.

The control parameter M is particularly a tuning factor that may be used to optimize the performance of the converter 2 under unbalanced voltage conditions. The control parameter M is particularly defined as a ratio of time constants (or inversely, the bandwidths) of voltage and current control loops: $M = \frac{{τ}_{v}}{{τ}_{c}} = \frac{{BW}_{c}}{{BW}_{v}}$ where τ*ᵥ* is particularly a time constant of the voltage control loop (related to the bandwidth *BWᵥ*). τ*_{c}* is particularly a time constant of the current control loop (related to the bandwidth *BW_{c}*). *BWᵥ* is particularly a bandwidth of the voltage control loop. *BW_{c}* is particularly a bandwidth of the current control loop.

The control parameter M may control a relative speed of the voltage and current control loops. A low control parameter M may mean the voltage control loop is faster compared to the current control loop (higher *BWᵥ*). A high control parameter M may mean the voltage control loop is slower than the current control loop (lower *BWᵥ*).

The foregoing explanation of the embodiments describes the present invention in the context of examples. Of course, individual features of the embodiments can be freely combined with each other, provided that this is technically reasonable, without leaving the scope of the present invention.

### Reference list

- 1: industrial automation system
- 2: converter
- 3: external power supply
- 4: internal power supply
- 5: transistor element
- 6: body diode
- 7: phase conductor
- 8: external device
- 9,9a: display

- 10: Data processing apparatus
- 11,11 a: speakers
- 15: Power supply unit

- 20: computer program

- 100: method
- 101: Analysing
- 102: Modifying

## Claims

1. A method (100) for operating a converter (2) of an industrial automation system (1) based on an analysis of a power quality in the industrial automation system (1), the converter (2) being provided for converting an alternating current of an external power supply (3) into a direct current for a power supply (4) of the industrial automation system (1), the converter (2) being preferably configured as an inverter (2), more preferably as a bidirectional inverter (2) and/or voltage source inverter (2), comprising:
- Analysing (101) the power quality in the industrial automation system (1),
- Modifying (102) a mode of operation of the converter (2) depending on a result of the analysis (101), thereby adapting the conversion by the converter (2) to the power quality.

2. The method (100) of claim 1,
**characterized in that**, during the modifying (102), the mode of operation is switched between a first mode of operation where the conversion is performed by means of at least one transistor element (5) of the converter (2) and a second mode of operation where the conversion is performed by means of only at least one body diode (6) of the at least one transistor element (5), and/or
**characterized in that**, during the modifying (102), the mode of operation is switched between a first mode of operation and a second mode of operation, the first mode of operation being an inverter operation mode, and the second mode of operation being an rectifier operation mode, particularly emergency mode, the two modes differing **in that** the at least one transistor element (5), preferably inverter MOSFETs, are actively used in the first mode of operation and passively used in the second mode of operation, preferably the body diodes that rectify the alternating current are used in the first mode of operation, thereby causing a reduction of the direct current for a power supply (4).

3. The method (100) of claim 2,
**characterized in that** the method (100) further comprises:
- Acquiring a voltage and/or a current of the external power supply (3), the external power supply (3) being connected to the industrial automation system (1) for supplying the same,
- Performing the analysing (101) based on the acquired voltage and/or current.

4. The method (100) of claim 3, **characterized in that** the acquiring, the analysing (101) and the modifying (102) are performed by a power supply unit (15) of the industrial automation system (1), wherein the conversion is performed by the same power supply unit (15).

5. The method (100) of claim 3 or 4, **characterized in that** the external power supply (3) is a mains power supply and the acquiring is performed respectively in each phase conductor (7) of the mains power supply.

6. The method (100) of any one of claims 3 to 5, **characterized in that** the acquiring comprises measuring a respective voltage magnitude and/or current magnitude of individual phase conductors (7) of the external power supply and/or performing a phase measurement to determine a phase difference between the individual conductors of the external power supply.

7. The method (100) of claim 6, **characterized in that** the method (100) further comprises:
- Determining a Voltage Unbalance Factor of the external power supply based on the measured voltage magnitude and the performed phase measurement,
wherein, during the analysing (101), the power quality is evaluated based on an analysis of the determined Voltage Unbalance Factor.

8. The method (100) of any one of claims 3 to 7, **characterized in that** the method (100) further comprises:
- Determining a Total Harmonic Distortion based on an analysis of the acquired voltage and/or current,
wherein, during the analysing (101), the power quality is evaluated based on an analysis of the determined Total Harmonic Distortion.

9. The method (100) of any one of the preceding claims, **characterized in that** the method (100) further comprises:
- Initiating a visualisation of the power quality, particularly on a display (9) of the industrial automation system (1) or a display (9) of an external device (8), the visualisation particularly comprising a curve shape of the power across a defined timespan and/or an evaluation of the power quality and/or at least one characteristic of the power quality.

10. The method (100) of any one of the preceding claims, **characterized in that** the method (100) further comprises:
- Comparing the power quality with at least one defined threshold,
- Initiating an alert, if the power quality is below the at least one defined threshold, the alert being a visual alert by means of a display (9) of the industrial automation system (1) or of an external device (8) and/or an acoustic alert by means of speakers (11) of the industrial automation system (1) or of an external device (8), the alert particularly comprising a warning indicating a low power quality and/or an instruction for a repair of the industrial automation system (1).

11. The method (100) of any one of claims 2 to 10, **characterized in that** the at least one transistor element (5) is a metal-oxide-semiconductor field-effect transistor and the at least one body diode (6) is integrated in a respective corresponding metal-oxide-semiconductor field-effect transistor.

12. Industrial automation system (1), the industrial automation system (1) being designed to carry out the method (100) according to one of the preceding claims.

13. A computer program (20), comprising instructions which, when the computer program (20) is executed by at least one computer, cause the computer to carry out the method (100) of any one of claims 1 to 11.

14. A data processing apparatus (10), comprising means for carrying out the method (100) of any one of claims 1 to 11.

15. A power supply unit (15) comprising a data processing apparatus (10) according to claim 14.
